(19) Europäisches Patentamt / European Patent Office / Office européen des brevets

(11) **EP 2 635 397 B1**

(12) **FASCICULE DE BREVET EUROPEEN**

(45) Date de publication et mention
de la délivrance du brevet:
**04.09.2019 Bulletin 2019/36**

(21) Numéro de dépôt: **11778564.2**

(22) Date de dépôt: **28.10.2011**

(51) Int Cl.:
**B23K 26/38** *(2014.01)*     **B23K 26/14** *(2014.01)*
**B23K 26/06** *(2014.01)*     **G21D 1/00** *(2006.01)*

(86) Numéro de dépôt international:
**PCT/EP2011/068970**

(87) Numéro de publication internationale:
**WO 2012/059421 (10.05.2012 Gazette 2012/19)**

(54) **PROCEDE OPTIMISE DE DECOUPE PAR LASER, VIS-A-VIS DU DEFAUT DE MASSE LINEIQUE**

HINSICHTLICH DER MASSENDEFEKTE PRO EINHEITSLÄNGE OPTIMIERTES LASERSCHNEIDVERFAHREN

LASER CUTTING METHOD OPTIMIZED IN TERMS OF MASS DEFECT PER UNIT LENGTH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.11.2010 FR 1058989**

(43) Date de publication de la demande:
**11.09.2013 Bulletin 2013/37**

(73) Titulaires:
• **Commissariat à l'Énergie Atomique
et aux Énergies Alternatives
75015 Paris (FR)**
• **Institut de Radioprotection et de Sûreté Nucléaire
92260 Fontenay aux Roses (FR)**
Etats contractants désignés:
**FR**

(72) Inventeurs:
• **CHAGNOT, Christophe
F-78140 Velizy-Villacoublay (FR)**
• **CANNEAU, Gaétan
F-75017 Paris (FR)**
• **PILOT, Guy
F-78114 Magny Les Hameaux (FR)**
• **FAUVEL, Sylvain
F-91440 Bures-sur-Yvette (FR)**

(74) Mandataire: **Regimbeau
20, rue de Chazelles
75847 Paris Cedex 17 (FR)**

(56) Documents cités:
**JP-A- 2006 007 304**

• **DRYGALLA M ET AL: "Modularised laser beam cutting technology for dismantling applications", WELDING IN THE WORLD, ELSEVIER / INTERNATIONAL INSTITUTE OF WELDING, ROISSY, FR, vol. 51, no. 9/10, 1 septembre 2007 (2007-09-01), pages 17-23, XP001518959, ISSN: 0043-2288**
• **PAVELE L A: "EFFECTS OF THE ENERGY AND GAS-HYDRODYNAMIC PARAMETERS OF THE LASER CUTTING PROCESS ON THE FORMATION OF CUT SURFACES", WELDING INTERNATIONAL, TAYLOR & FRANCIS, ABINGDON, GB, vol. 20, no. 4, 1 janvier 2006 (2006-01-01), pages 316-321, XP001241590, ISSN: 0950-7116, DOI: DOI:10.1533/WINT.2006.3615**
• **RICERCHE A: "LASER BEAM CUTTING AND SEALING OF PIPING FROM HIGH-RISK PLANTS", WELDING INTERNATIONAL, TAYLOR & FRANCIS, ABINGDON, GB, vol. 9, no. 8, 1 janvier 1995 (1995-01-01), pages 629-633, XP000523783, ISSN: 0950-7116**
• **BÖHME ET AL: "Handbuch der Schweissverfahren, Teil 2", HANDBUCH DER SCHWEISSVERFAHREN, XX, XX, 1 janvier 1992 (1992-01-01), pages 174-175, XP002206753,**

**Description**

DOMAINE TECHNIQUE GENERAL

La présente invention concerne un procédé optimisé de découpe par laser d'une pièce d'un matériau par un système de découpe comportant

- une source laser de production d'un faisceau laser d'une certaine puissance, et
- une tête de découpe comportant une buse extrémale de passage du faisceau laser de découpe.

ETAT DE L'ART

On connaît une application des lasers pour la découpe de matériaux, notamment des métaux. La découpe est créée par évaporation et par fusion de la matière sous le faisceau laser.

Un système de découpe laser comporte de manière classique une tête, comportant une chambre interne et une arrivée de gaz sous pression et remplissant la chambre avant d'être éjecté vers le matériau à découper.

Le gaz permet d'évacuer le matériau, fondu et vaporisé par le faisceau laser.

La matière fondue qui est en partie oxydée se solidifie à nouveau en dehors de la découpe. On distingue :

- des scories adhérentes à la surface du matériau découpé, c'est-à-dire des particules solides constituées par l'éjection de la matière en fusion de la saignée de découpe et ses composés formés par oxydoréduction ainsi que l'accumulation d'impuretés lors de la fusion du matériau découpé ;
- des scories sédimentées, c'est-à-dire des scories n'adhérant pas à la surface du matériau découpé et tombant par gravité ;
- des aérosols, c'est-à-dire des particules solides formées la projection et la vaporisation d'une partie de la matière de la découpe et la constitution de composés formés par oxydoréduction lors de la fusion du matériau découpé, mais restant en suspension dans un milieu gazeux ambiant, c'est-à-dire présentant une vitesse de chute négligeable.

Les scories adhérentes, étant liées au matériau découpé, sont collectées avec le matériau découpé.

En revanche, la dispersion des scories sédimentées rend leur collecte difficile.

On comprend aisément que lorsque la découpe par laser est utilisée pour le démantèlement des installations nucléaires, les scories sédimentées sont encore plus indésirables, car ils contiennent des matériaux irradiés ou contaminés et par conséquent radioactifs.

Le document de M. Drygalla et al. « Modularised laser beam cutting technology for dismantling applications », paru dans "Welding in the World, Vol.51, n9/10, Sept. 2007", décrit des techniques de découpe laser pour le démantèlement d'installations nucléaires visant à minimiser la quantité totale d'émissions. Néanmoins, ce document ne fait pas de distinction entre scories adhérentes d'une part et scories sédimentées et aérosols d'autre part.

Il n'existe à ce jour aucun procédé optimisé de découpe laser qui permette de limiter la production des résidus, notamment des scories sédimentées, de la manière décrite ci-après.

PRESENTATION DE L'INVENTION

L'invention propose de pallier au moins un de ces inconvénients.

A cet effet, on propose selon l'invention un procédé optimisé de découpe par laser d'une pièce d'un matériau par un système de découpe comportant

- une source laser de production d'un faisceau laser avec une puissance, et
- une tête de découpe comportant une buse extrémale de passage du faisceau laser de découpe,

le procédé étant caractérisé en ce qu'il comporte une étape de détermination d'une puissance Pd de découpe telle que :

$$Pd = Max(Popt; \lambda e)$$

où Max est l'opérateur mathématique du maximum,

Popt est une puissance optimale du faisceau laser du système de découpe, déterminée en fonction

de la pièce à découper, et/ou
de paramètres de découpe et/ou
du type de système,

pour minimiser le défaut de masse linéique de la pièce lors d'une découpe de la pièce
où le défaut de masse linéique (Mp) est défini comme le défaut de masse de la pièce, après la découpe, par unité de longueur découpée, exprimée en g/m; et où Mp est obtenu par différence de pesée avant (Mi) et après (Mf) la découpe de longueur L, tel que Mp = (Mf - Mi)/L;
λ est un coefficient directeur représentant le nombre de kW nécessaires pour la découpe de la pièce par mm d'épaisseur de pièce, et
e est l'épaisseur de la pièce, en mm.

L'invention est avantageusement complétée par les caractéristiques suivantes, prises seules ou en une quelconque de leur combinaison techniquement possible :

- la puissance Pd de découpe est de la forme :

$$Pd = Max(\Lambda; \lambda e) \, .$$

où Λ est une constante prédéterminée,
λ est un coefficient directeur représentant le nombre de kW nécessaires pour la découpe de la pièce par mm d'épaisseur de pièce, et
e est l'épaisseur de la pièce, en mm.
- pour un système de découpe comportant une source laser du type grenat d'yttrium-aluminium YAG pour la production d'un faisceau laser ayant une longueur d'onde de l'ordre de 1 μm, la puissance Pd est de la forme :

$$Pd = Max(4,75; 0,1 \cdot e) \, .$$

- le procédé comporte une étape initiale de détermination d'une expression de la puissance du faisceau laser en fonction de la pièce à découper, et/ou de paramètres de découpe, et/ou du type de système, étape initiale selon laquelle :
- le système effectue une pluralité de découpes d'essai d'une pièce en faisant varier la puissance du faisceau, et/ou la pièce à découper, et/ou des paramètres de découpe et/ou le type de système ;
- un capteur effectue une pluralité de mesures correspondantes du défaut de masse lors de chaque découpe d'essai de la pièce,
- un calculateur

exprime le défaut de masse linéique lors de chaque découpe d'essai de la pièce en fonction de la puissance du faisceau, et/ou de la pièce à découper, et/ou des paramètres de découpe et/ou du type de système ;
effectue une dérivée partielle de l'expression du défaut de masse linéique, par rapport à la puissance du faisceau laser, et détermine (S4) l'expression permettant d'annuler ladite dérivée partielle en fonction de la pièce à découper, et/ou des paramètres de découpe et/ou le type de système.

L'invention présente de nombreux avantages.

Elle permet en effet de favoriser la formation des scories adhérentes, au lieu des scories sédimentées, pour faciliter l'évacuation des résidus de découpe avec le matériau découpé.

La dispersion des scories sédimentées dans le milieu ambiant est réduite.

En effet le défaut de masse linéique $M_P$ est défini comme le défaut de masse de la pièce, après la découpe, par unité de longueur découpée, exprimée en g/m. Mp est obtenu par différence de pesée avant Mi et après Mf la découpe de longueur L :

$$M_P = \frac{M_f - M_i}{L} \, .$$

Mp prend en compte à la fois la perte de matière par transformation du métal en scories sédimentées et en aérosols, mais aussi un gain de masse par oxydation des scories adhérentes.

On comprend cependant qu'en minimisant le défaut de masse linéique, on augmente la proportion de scories adhérentes par rapport aux scories sédimentées.

La réduction notamment des scories sédimentées est avantageuse dans le cas où la découpe par laser est utilisée pour le démantèlement des installations nucléaires. On facilite ainsi la collecte des déchets.

En revanche, la découpe est toujours effectuée.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée dans l'état de l'art, représente un système de découpe ;
- la figure 2 représente les sous-étapes principales d'un procédé selon l'invention ; et
- les figures 3 représentent l'effet de l'épaisseur de la pièce sur le défaut de masse linéique en fonction de la puissance du faisceau laser, pour des diamètres de buses DB de 3mm et 6 mm (H = 30 mm).

Sur l'ensemble des figures, les éléments similaires portent des références identiques.

DESCRIPTION DETAILLEE

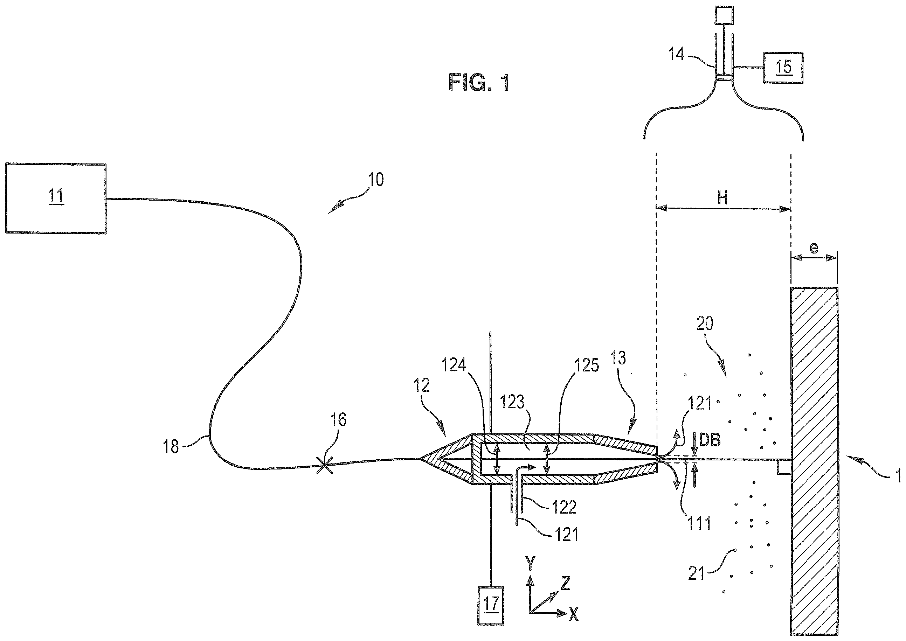

La figure 1 représente un système 10 de découpe comportant principalement

- une source 11 laser de production d'un faisceau 111 laser présentant une puissance, pour la découpe d'une pièce 1 d'une certaine épaisseur e, et
- une tête 12 de découpe comportant une buse 13 extrémale de passage du faisceau 111 laser de découpe.

La pièce 1 est représentée plane, mais peut également avoir un profil quelconque, par exemple courbe.

Le faisceau 111 doit avoir typiquement une puissance de 1kW par cm (10 mm) d'épaisseur de pièce à couper, notamment pour un acier inoxydable.

Le diamètre de la buse 13 est référencé par DB. Il est en général de 3 mm ou de 6 mm, mais d'autres valeurs sont bien entendu possibles.

La source 11 est reliée à la tête par deux fibres optiques. La première, située à l'extérieur du chantier ou de la cellule de démantèlement, n'est pas contaminable, contrairement à la seconde, située à l'intérieur du chantier. Les deux fibres sont reliées grâce un coupleur 16 optique. Chaque fibre est dotée à chacune de ses extrémités d'un connecteur qui permet son démontage : de la source, du coupleur et de la tête optique. Le remplacement de la tête 12 et de la seconde fibre est ainsi facilité, notamment lorsque la tête 12 ou la fibre a été utilisée pour le démantèlement des installations nucléaires, et est donc susceptible d'être radioactive par contamination.

La fibre 18 peut être d'une longueur quelconque, mais est en général d'une longueur de 100 m de la source 11 jusqu'au coupleur 16 (pour un diamètre de 400 $\mu$m par exemple), et de 20 m du coupleur à la tête 12 (pour un diamètre de 600 $\mu$m par exemple).

La position de découpe du faisceau 111 est préférentiellement à angle droit par rapport à la pièce 1 à découper, par exemple à l'horizontal. La distance H entre l'extrémité de la buse 13 et la pièce 1 peut être de différentes valeurs, mais est en général comprise entre 5 et 30 mm, en fonction de la puissance du faisceau 111 et d'une épaisseur e de la pièce.

La tête 12 peut être déplacée selon les cinq axes (trois translations et deux rotations) pour effectuer la découpe, grâce à un actionneur 17 (typiquement un robot cinq axes ou un télé-manipulateur).

Le déplacement de la tête 12 se déroule avec une certaine vitesse V courante de découpe, lors d'une découpe. On comprend qu'il faille un certain temps pour découper une épaisseur e d'une pièce 1, pour une puissance du faisceau 111 donnée: si la tête 12 se déplace trop rapidement par rapport à la pièce 1, la découpe n'est pas effectuée correctement sur toute l'épaisseur e. On appelle la vitesse limite $V_L$ de découpe la vitesse au-delà de laquelle la pièce 1 n'est pas découpée.

La vitesse limite $V_L$ n'est en pratique jamais atteinte sur un chantier de démantèlement, pour assurer une marge de sécurité et garantir la découpe de la pièce.

On définit ainsi un coefficient k, appelé coefficient de vitesse limite de la tête 12 de découpe, comme le rapport entre la vitesse courante de découpe et la vitesse limite de découpe de la pièce 1, soit :

$$k = \frac{V}{V_L}.$$

k prend en général les valeurs 0,5 ou 0,7 sur les chantiers, mais peut avoir une valeur quelconque inférieure à 1 en fonction de la marge de sécurité souhaitée.

De manière classique, la tête 12 comporte une chambre interne 123 et une arrivée 122, latérale en général, de gaz 121 sous pression et remplissant la chambre 123. La buse 123 laisse ainsi également échapper le gaz 121 sous pression entourant le faisceau 111. Le gaz 121 permet d'évacuer le matériau de la pièce 1, fondu et vaporisé par le faisceau 111. Le gaz 121 est en général de l'air. Un débit de passage de gaz 121 est de l'ordre de 400 L/min.

La chambre 123 comporte une lentille 124 de collimation du faisceau 111 et une lentille 125 de focalisation du faisceau 111. La distance focale de la lentille 124 de collimation peut être de 80 mm par exemple, et la distance focale de la lentille 125 de focalisation peut être de 253 mm par exemple.

Lors de la découpe de la pièce 1 par le faisceau 111, des résidus sont créés, notamment des aérosols 20 et des scories sédimentées 21, ce qui crée un défaut Mp de masse linéique.

PRINCIPE GENERAL DE L'INVENTION

L'invention permet de minimiser le défaut Mp lors d'une découpe de la pièce 1, en déterminant une puissance Popt optimale du faisceau 111 laser du système 10 de découpe.

A cet effet, la puissance Popt optimale du faisceau 111 laser du système 10 de découpe est exprimée, dans une expression, en fonction

- de la pièce 1 à découper, et/ou
- de paramètres de découpe, et/ou
- du type de système 10,

pour minimiser le défaut de masse linéique lors d'une découpe de la pièce 1.

La minimisation du défaut de masse linéique maximisera principalement la production de scories adhérentes.

La pièce 1 est par exemple représentée dans l'expression précitée par la valeur e de l'épaisseur de la pièce, mais pourrait par exemple être également représentée par un autre paramètre représentatif de la pièce, comme le type de matériau et/ou d'alliage composant la pièce (304 ou 316 L par exemple).

Les paramètres de découpe dans l'expression précitée sont par exemple

- la distance H entre la buse 13 et la pièce 1, ou
- le coefficient k, ou également par exemple
- le diamètre d'impact du faisceau.

Le type de système est par exemple représenté dans l'expression précitée par le diamètre DB, lié au débit de gaz 121, mais d'autres paramètres pourraient également être pris en compte, comme

- le débit de gaz,
- la nature du gaz,
- la pression d'arrêt à la surface de la pièce 1, ou
- le type de fibre optique.

La pression d'arrêt est liée à l'énergie cinétique du gaz 121 et résulte du débit de gaz 121, du diamètre DB et de la géométrie de la buse 13, ainsi que de la distance H.

Une pression d'arrêt minimale est nécessaire pour assurer la découpe. Ainsi, pour un diamètre d'impact du faisceau laser sur la pièce compris entre 2 et 4 mm, une pression de 0.08 bar est nécessaire pour découper 10 mm d'acier inoxydable. Dans la pratique, 0.25 bar est une valeur qui assure une robustesse satisfaisante pour des épaisseurs de pièce inférieures à 80 mm. Une pression de 0.8 bar permet de découper des pièces d'acier inoxydable jusqu'à 100 mm.

Une pression d'arrêt plus élevée améliore certes la productive de la découpe, en fournissant une vitesse limite plus élevée pour la même puissance (une pression de 0.8 bar permet ainsi de doubler la vitesse limite de découpe obtenue avec la pression d'impact de 0.25 bar pour les épaisseurs comprise en 20 et 80 mm), mais elle diminue la part de scories adhérentes au profit des scories sédimentées en favorisant l'évacuation de la matière fondue et des scories qui se forment à l'intérieur de la découpe.

La valeur de 0.25 est ainsi préconisée pour les épaisseurs inférieures à 80 mm et la valeur de 0.8 bar est préconisée pour les épaisseurs de 80 à 100 mm ou de 20 à 80 mm si une productivité accrue est requise.

PRINCIPE GENERAL DE DETERMINATION DE LA PUISSANCE

Afin de pouvoir déterminer la puissance Popt, on comprend qu'il est nécessaire de passer par une étape initiale de détermination de l'expression de la puissance en fonction de la pièce 1 à découper, et/ou de paramètres de découpe, et/ou du type de système 10.

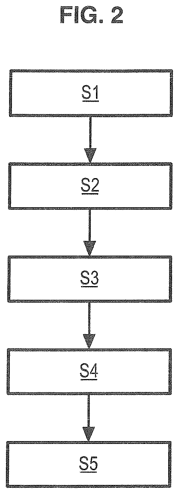

Selon l'étape initiale de détermination représentée de façon schématique sur la figure 2, le système 10 effectue, lors d'une étape S1, une pluralité de découpes d'essai d'une pièce 1 en faisant varier la puissance du faisceau 111, et/ou la pièce 1 à découper, et/ou des paramètres de découpe et/ou le type de système 10.

Lors de l'étape S1, le système 10 effectue ainsi des découpes avec par exemple :

- différentes valeurs de puissances du faisceau 111, et/ou
- différentes valeurs d'épaisseurs e de pièce 1, et/ou
- différentes valeurs de k, et/ou
- différentes valeurs de H, et/ou
- différentes valeurs de DB.

Lors d'une étape S2 un capteur 14 effectue une pluralité de mesures correspondantes du défaut Mp lors de chaque découpe d'essai de la pièce 1.

Le capteur 14 utilisé lors de l'étape S2 comporte notamment une balance permettant de peser la pièce 1 avant et après la découpe.

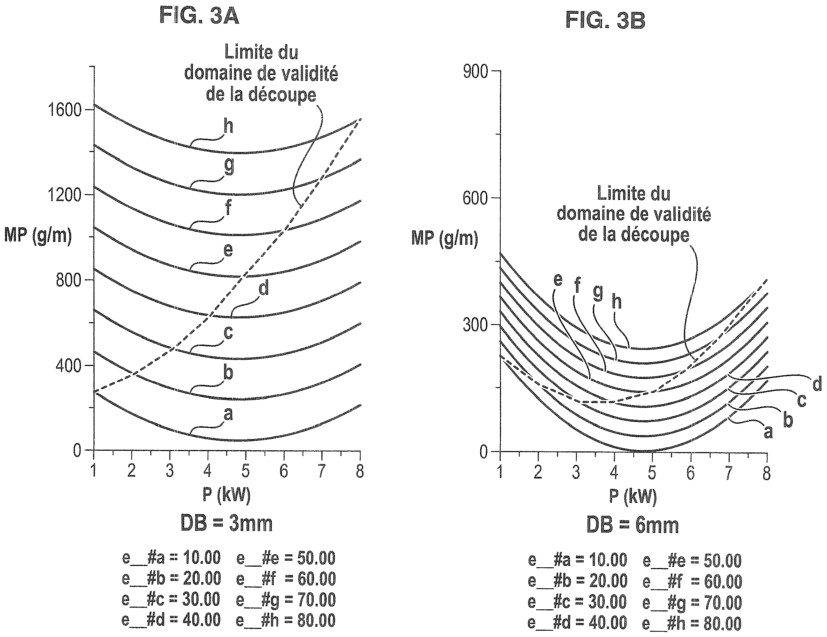

Un calculateur 15 connu de l'homme du métier, comportant tous les moyens classiques de mémoire et de traitement, et relié au capteur 14, permet de tracer les courbes des figures 3 représentant de manière générale l'évolution de Mp en fonction de la puissance du faisceau 111.

Les inventeurs ont constaté que les courbes des figures 3 semblent indiquer que le défaut de masse linéique est minimal pour une certaine puissance, appelée Popt dans la présente description.

Des étapes S3 et S4 permettent donc de déterminer Popt en fonction des mesures du capteur 14.

A cet effet, lors de l'étape S3, le calculateur 15 exprime Mp lors de chaque découpe d'essai de la pièce 1 en fonction de la puissance du faisceau 111, et/ou de la pièce 1 à découper, et/ou des paramètres de découpe et/ou du type de système 10.

Si les paramètres pris en compte sont la puissance P, l'épaisseur e, le coefficient k, la distance H et le diamètre de buse DB, on obtient grâce au calculateur 15 une expression du type :

$$M_P = f(P,e,k,H,DB) \ \text{(E1)}$$

Pour trouver l'expression E1, le calculateur 15 effectue ainsi la construction d'un modèle mathématique en fonction des mesures issues du capteur 14, en utilisant une pluralité de régressions, par exemple linéaire, logarithmique, carrée, ou autre, et garde l'expression donnant le modèle le plus proche des mesures, c'est-à-dire donnant un coefficient connu de corrélation mathématique $R^2$, entre les mesures et les valeurs données par le modèle, tel que par exemple :

$$R^2 > 0,9.$$

Etant donné que les courbes des figures 3 montrent que Mp en fonction de la puissance comporte un minimum, le calculateur 15 trouve ce minimum en annulant, lors de l'étape S4, une dérivée partielle de l'expression (E1) de Mp par rapport à la puissance du faisceau laser. On sait alors que l'annulation de la dérivée partielle correspond à l'optimum de P.

Le calculateur 15 effectue donc tout d'abord :

$$\frac{\partial M_P}{\partial P} = \frac{\partial}{\partial P} f(P,e,k,H,DB) \ \text{(E2)}$$

Le calculateur 15 détermine ensuite également lors de l'étape S4 l'expression permettant d'annuler ladite dérivée partielle en fonction de la pièce 1 à découper, et/ou des paramètres de découpe et/ou le type de système 10. Le calculateur 15 effectue donc :

$$\frac{\partial M_P}{\partial P} = 0$$

pour trouver l'expression de P minimisant le défaut de masse linéique.

EXEMPLE DE DETERMINATION

Lors de l'étape S1, le système 10 effectue une pluralité de découpes d'essai d'une pièce 1 d'épaisseur e, avec un diamètre DB de la buse 13 et un coefficient k de vitesse limite de la tête 12 de découpe.
Le système 10 utilisé comporte une source 11 laser du type grenat d'yttrium-aluminium YAG, par exemple à disque, pouvant produire un faisceau 111 laser ayant une longueur d'onde de l'ordre de 1 µm.
Lors des découpes, la puissance P du faisceau 111 laser est variable de 1 à 8 kW (des puissances de 3 kW, 5 kW et 8 kW sont par exemple utilisées), en tenant compte du fait qu'il est nécessaire, pour qu'il y ait découpe, de disposer d'environ 1 kW pour chaque cm (10 mm) d'épaisseur de la pièce.
Le débit de gaz 121 a été maintenu constant égal à 400 L/min lors de la pluralité de découpes.
La pièce 1 à découper est une pièce en acier inoxydable 316 L (référence norme AFNOR : X2 Cr Ni Mo 18-10 1.4404) d'épaisseur e, représentative des éléments constitutifs d'une installation nucléaire à démanteler. Lors des découpes d'essai, l'épaisseur e varie par exemple de 10 mm à 80 mm.
Lors des découpes d'essai, les diamètres DB prennent les valeurs 3 mm ou 6 mm.
Les valeurs 0,1 ; 0,25 ; 0,5 et 0,7 sont prises pour k.
A titre d'information, les valeurs de $V_L$ sont reprises dans les tableaux 1 et 2 suivants, pour une pièce inox 316L - H 30 mm - Débit 400 L/min : vitesse limite (mm/min).

Tableau 1 - Vitesses limites de découpe pour la buse de DB 3 mm.

| e (mm) | VL 8KW | VL 6KW | VL 4KW | VL 3KW | VL 2KW |
|--------|--------|--------|--------|--------|--------|
| 100 | 7,5 | | | | |
| 80 | 20 | | | | |
| 60 | 40 | 20 | | | |
| 40 | 125 | 75 | 20 | | |
| 30 | 200 | 125 | 75 | 40 | |
| 20 | 450 | 300 | 175 | 100 | 20 |
| 10 | 1200 | 900 | 600 | 400 | 200 |

Tableau 2 - Vitesses limites de découpe pour la buse de DB 6 mm.

| e (mm) | VL 8KW | VL 6KW | VL 4KW | VL 3KW | VL 2KW |
|--------|--------|--------|--------|--------|--------|
| 100 | | | | | |
| 80 | 10 | | | | |
| 60 | 30 | 15 | | | |
| 40 | 75 | 60 | 10 | | |
| 30 | 175 | 125 | 50 | 20 | |
| 20 | 350 | 250 | 125 | 70 | 10 |
| 10 | 1000 | 800 | 600 | 400 | 200 |

Le tableau 3 ci-après reprend les mesures du capteur 14 concernant le défaut de masse linéique de la pièce 1 (dernière colonne).

Tableau 3

| N° dans le plan | Diamètre Buse DB (mm) | Puissance Laser P (kW) | Epaisseur plaque e (mm) | Distance plaque-col H (mm) | Vitesse de découpe k (-) | Vitesse de découpe $V_R$ (m/min) | Masse linéique d'aérosol $M_1$ (g/m) | Masse linéique d'aérosol IC($M_1$) (g/m) | Masse surfacique d'aérosol $M_2$ (g/m²) | Masse surfacique d'aérosol IC($M_2$) (g/m²) | Masse linéique $H_2$ [$H_2$] (mg/m) | Masse linéique $H_2$ IC([$H_2$]) (mg/m) | Volume scories adhérentes v (cm³/m) | Défaut de masse de la plaque $M_P$ (g/m) | Défaut de masse de la plaque IC($M_P$) (g/m) |
|---|---|---|---|---|---|---|---|---|---|---|---|---|---|---|---|
| 0 | 3 | 2,1 | 10 | 30 | 0,50 | 0,109 | 2,26 | 0,22 |  |  | 9,0 | 1,9 | 16,7 | 110 | 2 |
| 1 | 3 | 3 | 10 | 30 | 0,25 | 0,109 | 3,55 | 0,25 | 359 | 25 | 11,7 | 3,1 | 16,9 | 153 | 4 |
| 2 | 6 | 3 | 10 | 15 | 0,48 | 0,179 | 1,27 | 0,09 | 128 | 9 | 4,6 | 1,9 | 35,1 | 64 | 4 |
| 3 | 3 | 8 | 10 | 15 | 0,50 | 0,477 | 4,10 | 0,28 | 415 | 29 | 13,6 | 2,4 | 2,3 | 179 | 4 |
| 4 | 6 | 8 | 10 | 30 | 0,25 | 0,249 | 2,23 | 0,16 | 226 | 16 | 7,9 | 2,3 | 16,5 | 169 | 4 |
| 4 | 6 | 8 | 10 | 30 | 0,25 | 0,249 | 2,25 | 0,16 | 228 | 16 | 7,5 | 2,2 | 24,8 | 193 | 4 |
| 4 | 6 | 8 | 10 | 30 | 0,25 | 0,249 | 2,39 | 0,17 | 242 | 17 | 4,5 | 2,0 | 26,2 | 185 | 4 |
| 4 | 6 | 8 | 10 | 30 | 0,25 | 0,249 | 2,34 | 0,16 | 237 | 17 | 4,7 | 2,0 |  | 171 | 4 |
| 5 | 3 | 3 | 20 | 30 | 0,49 | 0,044 | 12,5 | 0,9 | 611 | 42 | 31,6 | 6,0 | 17,5 | 292 | 7 |
| 5 | 3 | 3 | 20 | 30 | 0,49 | 0,044 | 10,9 | 0,8 | 534 | 37 | 24,2 | 6,7 | 37,2 | 275 | 10 |
| 6 | 6 | 3 | 20 | 15 | 0,25 | 0,015 | 12,2 | 0,9 | 595 | 43 | 5,2 | 6,2 | 91,9 | 106 | 20 |
| 7 | 3 | 8 | 20 | 15 | 0,24 | 0,109 | 8,84 | 0,88 | 432 | 43 | 19,8 | 5,8 | 20,9 | 393 | 10 |
| 8 | 6 | 8 | 20 | 30 | 0,50 | 0,199 | 2,90 | 0,20 | 141 | 10 | 6,2 | 2,9 | 126,0 | 276 | 6 |
| 8 | 6 | 8 | 20 | 30 | 0,50 | 0,199 | 3,41 | 0,24 | 167 | 12 | 5,0 | 2,9 | 148,5 | 247 | 6 |
| 9 | 3 | 8 | 30 | 30 | 0,25 | 0,056 | 15,7 | 1,1 | 504 | 37 | 13,7 | 8,3 | 58,0 | 586 | 22 |
| 10 | 3 | 8 | 60 | 30 | 0,24 | 0,010 | 32,4 | 3,3 | 504 / 533 | 55 | 27,9 | 19,3 |  | 1336 | 42 |
| 11 | 3 | 8 | 30 | 30 | 0,49 | 0,109 | 10,6 | 0,7 | 340 | 24 | 20,9 | 6,1 | 15,3 | 692 | 11 |
| 11 | 3 | 8 | 30 | 30 | 0,49 | 0,109 | 10,0 | 0,7 | 322 | 23 | 20,0 | 5,5 | 22,1 | 662 | 10 |
| 12 | 3 | 8 | 60 | 30 | 0,50 | 0,021 | 33,8 | 2,4 | 556 | 40 | 67,3 | 14,9 | 135,3 | 925 | 22 |
| 13 | 3 | 8 | 80 | 30 | 0,57 | 0,010 | 40,4 | 2,9 | 504 | 38 | 59,7 | 22,5 |  | 1576 | 45 |
| 14 | 3 | 5 | 30 | 30 | 0,70 | 0,070 | 8,41 | 0,59 | 270 | 19 | 16,2 | 6,1 | 85,4 | 390 | 10 |
| 15 | 3 | 8 | 30 | 30 | 0,71 | 0,159 | 6,47 | 0,37 | 208 | 12 | 19,7 | 6,5 | 11,0 | 657 | 11 |

| N° dans le plan | Diamètre Buse | Puissance Laser | Epaisseur plaque | Distance plaque-col | Vitesse de découpe | | Masse linéique d'aérosol | | Masse surfacique d'aérosol | | Masse linéique H$_2$ | | Volume scories adhérentes | Défaut de masse de la plaque | |
|---|---|---|---|---|---|---|---|---|---|---|---|---|---|---|---|
| | DB | P | e | H | k | V$_R$ | M, | IC (M$_1$) | M$_2$ | IC (M$_2$) | [H$_2$] | IC([H$_2$]) | v | M$_P$ | IC (M$_P$) |
| | mm | kW | mm | mm | - | m/min | g/m | g/m | g/m$^2$ | g/m$^2$ | mg/m | mg/m | cm$^3$/m | g/m | g/m |
| 17 | 3 | 8 | 60 | 30 | 0,71 | 0,030 | 32,5 | 1,9 | 534 | 31 | 62,7 | 15,0 | 99,0 | 1162 | 24 |
| 18 | 6 | 8 | 20 | 30 | 0,09 | 0,035 | 9,64 | 0,69 | 471 | 34 | 4,0 | 5,8 | 104,5 | 79 | 19 |
| 19 | 6 | 8 | 10 | 30 | 0,50 | 0,497 | 1,38 | 0,10 | 140 | 10 | 2,9 | 1,8 | 48,7 | 105 | 4 |
| 20 | 6 | 3 | 10 | 30 | 0,50 | 0,189 | 0,55 | 0,04 | 56 | 4 | 2,8 | 1,8 | 36,5 | 53 | 4 |
| 21 | 6 | 3 | 10 | 10 | 0,11 | 0,040 | 4,91 | 0,34 | 497 | 35 | 3,2 | 4,3 | 18,1 | 82 | 9 |
| 22 | 6 | 3 | 10 | 30 | 0,11 | 0,040 | 2,86 | 0,21 | 290 | 21 | 0,0 | | 43,3 | 53 | 10 |
| 23 | 3 | 8 | 60 | 15 | 0,24 | 0,010 | 43,7 | 3,2 | 719 | 55 | 27,6 | 19,0 | | 1259 | 43 |
| 25 | 6* | 3 | 10 | 0 | 0,11 | 0,040 | 4,75 | 0,33 | 481 | 34 | 4,5 | 4,9 | | 47 | 9 |

EP 2 635 397 B1

Lors de l'étape S2, le calculateur 15 construit les courbes des figures 3, en fonction des mesures du tableau 3 issues du capteur 14 pour les découpes de l'étape S1.

Sur les figures 3, la courbe noire représente la borne supérieure du domaine de validité des courbes, pour tenir compte de la contrainte de 1 kW de puissance par cm (10 mm) d'épaisseur de pièce à découper.

Lors de l'étape S3, le calculateur 15 exprime le défaut de masse lors de chaque découpe d'essai de la pièce 1 en fonction de la puissance P du faisceau 111, de l'épaisseur e de la pièce 1 à découper, de la distance H, du coefficient k et du diamètre de buse DB du système 10.

Le calculateur 15 utilise une régression linéaire à partir des mesures de l'étape S2 pour donner le meilleur modèle. Dans notre exemple, l'équation (E1) est par exemple exprimée de la façon suivante, à partir des mesures du tableau 3 :

$$M_P = 237 - 93{,}2.(DB - 4{,}40) + 46{,}6.(P - 6{,}20) + 11{,}9.(e - 24{,}7) - 5{,}26.(DB - 4{,}40).(e - 24{,}7)$$
$$+ 16{,}0.(P - 6{,}20)^2$$

**(E1)**

Le coefficient de corrélation de (E1) par rapport aux mesures du tableau 3 est

$$R^2 = 0{,}9724.$$

L'équation (E2) correspondant à la dérivée partielle de l'expression de (E1) est ainsi

$$\frac{\partial}{\partial P}M_P = [46{,}6 + 32P - 198{,}4] = [32P - 151{,}8]\text{(E2)}$$

Le calculateur 15 détermine ensuite l'expression permettant d'annuler ladite dérivée partielle, en fonction de la pièce 1 à découper, des paramètres de découpe et du type de système 10.

En posant :

$$\frac{\partial}{\partial P}M_P = 0$$

le calculateur 15 trouve donc une constante $\Lambda$ telle que :

$$Popt = \frac{151{,}8}{32} = 4{,}75 \quad \text{(E3)}$$

Ainsi l'étape S5, la puissance Pd de découpe est déterminée de préférence de sorte qu'elle soit égale à Popt, qui minimise le défaut de masse linéique lors d'une découpe de la pièce 1, tout en veillant à ce que la puissance soit au moins égale à la puissance de découpe (on rappelle qu'il est nécessaire, pour qu'il y ait découpe, de disposer d'environ 1 kW pour chaque cm d'épaisseur de la pièce).

On peut donc définir une puissance minimale Pmin = λ.e, avec λ représentant le nombre de kW nécessaires pour la découpe de la pièce par mm d'épaisseur de pièce 1 (dans notre exemple 0,1), et e l'épaisseur de la pièce, en mm.

Si Popt est telle que

$$Popt < Pmin$$

alors Pmin sera pris pour Pd.

En revanche, si Popt est telle que

$$Popt > Pmin$$

alors Popt sera pris pour Pd.

**Revendications**

**1.** Procédé optimisé de découpe par laser d'une pièce (1) d'un matériau par un système (10) de découpe comportant

- une source (11) laser de production d'un faisceau (111) laser avec une puissance, et
- une tête (12) de découpe comportant une buse (13) extrémale de passage du faisceau (111) laser de découpe,

le procédé étant **caractérisé en ce qu'**il comporte une étape (S5) de détermination d'une puissance Pd de découpe telle que :

$$Pd = Max(Popt; \lambda e)$$

où Max est l'opérateur mathématique du maximum,
Popt est une puissance optimale du faisceau (111) laser du système (10) de découpe, déterminée en fonction

de la pièce (1) à découper, et/ou
de paramètres de découpe et/ou
du type de système (10),

pour minimiser le défaut (Mp) de masse linéique de la pièce lors d'une découpe de la pièce (1)
où le défaut de masse linéique (Mp) est défini comme le défaut de masse de la pièce, après la découpe, par unité de longueur découpée, exprimée en g/m; et où Mp est obtenu par différence de pesée avant (Mi) et après (Mf) la découpe de longueur L, tel que Mp = (Mf - Mi) / L ;
$\lambda$ est un coefficient directeur représentant le nombre de kW nécessaires pour la découpe de la pièce par mm d'épaisseur de pièce (1), et
e est l'épaisseur de la pièce, en mm.

**2.** Procédé selon la revendication 1, dans lequel la puissance Pd de découpe est de la forme :

$$Pd = Max(\Lambda; \lambda e) \,.$$

où $\Lambda$ est une constante prédéterminée,
$\lambda$ est un coefficient directeur représentant le nombre de kW nécessaires pour la découpe de la pièce par mm d'épaisseur de pièce, et
e est l'épaisseur de la pièce, en mm.

**3.** Procédé selon la revendication 2, dans lequel, pour un système (10) de découpe comportant une source (11) laser du type grenat d'yttrium-aluminium YAG pour la production d'un faisceau (111) laser ayant une longueur d'onde de l'ordre de 1 $\mu$m, la puissance Pd est de la forme :

$$Pd = Max(4,75; 0,1 \cdot e) \,.$$

**4.** Procédé selon l'une des revendications 1 à 3, comportant une étape initiale de détermination d'une expression de la puissance du faisceau laser en fonction de la pièce (1) à découper, et/ou de paramètres de découpe, et/ou du type de système (10), étape initiale selon laquelle :

- le système (10) effectue (S1) une pluralité de découpes d'essai d'une pièce (1) en faisant varier la puissance du faisceau (111), et/ou la pièce (1) à découper, et/ou des paramètres de découpe et/ou le type de système (10) ;

- un capteur (14) effectue une pluralité de mesures (S2) correspondantes du défaut (Mp) de masse lors de chaque découpe d'essai de la pièce (1),
- un calculateur (15)

exprime (S3) le défaut (Mp) de masse linéique lors de chaque découpe d'essai de la pièce (1) en fonction de la puissance du faisceau (111), et/ou de la pièce (1) à découper, et/ou des paramètres de découpe et/ou du type de système (10) ;

effectue une dérivée partielle (S4) de l'expression du défaut de masse linéique (Mp), par rapport à la puissance du faisceau laser, et détermine (S4) l'expression permettant d'annuler ladite dérivée partielle en fonction de la pièce (1) à découper, et/ou des paramètres de découpe et/ou le type de système (10).

**Patentansprüche**

1. Optimiertes Laserschneidverfahren eines Teils (1) aus einem Material mittels eines Schneidsystems (10), aufweisend

   - eine Laserquelle (11) für die Erzeugung eines Laserstrahls (111) mit einer Leistung, und
   - einen Schneidkopf (12), aufweisend eine terminale Düse (13) für den Durchgang des Schneidlaserstrahls (111),

   wobei das Verfahren **dadurch gekennzeichnet ist, dass** es einen Bestimmungsschritt (S5) einer Schneidleistung Pd aufweist, die derart ist, dass:

   $$pd = Max(Popt; \lambda e)$$

   wobei *Max* der mathematische Operator des Maximums ist,
   Popt eine optimale Leistung des Laserstrahls (111) des Schneidsystems (10) ist, bestimmt in Abhängigkeit von

   dem zu schneidenden Teil (1), und/oder
   von Schneidparametern und/oder
   dem Typ des Systems (10),

   zwecks Minimierung des linearen Dichtefehlers (Mp) des Teils bei einem Schneiden des Teils (1),
   wobei der lineare Dichtefehler (Mp) als Dichtefehler des Teils definiert ist, nach dem Schneiden, je geschnittene Längeneinheit, ausgedrückt in g/m, und
   wobei Mp durch die Differenz bei Wiegen vor (Mi) und nach (Mf) dem Schneiden der Länge L erhalten wird, wobei Mp = (Mf-Mi)/L ist;
   $\lambda$ ein Leitkoeffizient ist, welcher die Anzahl von kW darstellt, die für das Schneiden des Teils pro mm Stärke des Teils (1) notwendig sind, und
   e die Stärke des Teils ist, in mm.

2. Verfahren nach Anspruch 1, wobei die Schneidleistung Pd der Form ist:

   $$pd = Max(\Lambda; \lambda e)$$

   wobei $\Lambda$ eine vorher festgelegte Konstante ist,
   $\lambda$ ein Leitkoeffizient ist, welcher die Anzahl von kW darstellt, die für das Schneiden des Teils pro mm Stärke des Teils notwendig sind, und
   *e* die Stärke des Teils ist, in mm.

3. Verfahren nach Anspruch 2, wobei, für ein Schneidsystems (10), aufweisend eine Laserquelle (11) vom Typ Yttrium-Aluminium-Granat YAG für die Erzeugung eines Laserstrahls (111) mit einer Wellenlänge von zirka 1 μm, die Leistung Pd der Form ist:

   $$pd = Max(4.75; 0.1 \cdot e)$$

**4.** Verfahren nach einem der Ansprüche 1 bis 3, aufweisend einen Startschritt des Bestimmens einer Expression der Leistung des Laserstrahls in Abhängigkeit von dem zu schneidenden Teil (1), und/oder von Schneidparametern, und/oder vom Typ des Systems (10), Startschritt, gemäß dem:

- das System (10) eine Vielzahl von Testschnitten eines Teils (1) durchführt (S1) bei Änderung der Leistung des Strahls (111), und/oder des zu schneidenden Teils (1), und/oder der Schneidparameter und/oder des Typs des Systems (10);
- ein Sensor (14) eine Vielzahl entsprechender Messungen (S2) des Dichtefehlers (Mp) bei jedem Testschnitt des Teils (1) durchführt,
- ein Rechner (15)
den linearen Dichtefehler (Mp) bei jedem Testschnitt des Teils (1) in Abhängigkeit von der Leistung des Strahls (111), und/oder dem zu schneidenden Teil (1), und/oder den Schneidparametern und/oder dem Typ des Systems (10) ausdrückt (S3);
eine partielle Ableitung (S4) der Expression des linearen Dichtefehlers (Mp) in Bezug auf die Leistung des Laserstrahlts durchführt und die Expression bestimmt (S4), die erlaubt, die partielle Ableitung in Abhängigkeit von dem zu schneidenden Teil (1), und/oder den Schneidparametern und/oder dem Typ des Systems (10) zu annullieren.

**Claims**

**1.** An optimized method for laser-cutting a workpiece (1) of a material by a cutting system (10) including:

- a laser source (11) for producing a laser beam (111) with a power, and
- a cutting head (12) including an end nozzle (13) for the passage of the cutting laser beam (111),

the method being **characterized in that** it includes a step (S5) of determining a cutting power Pd such that:

$$pd = Max(Popt; \lambda e)$$

where

*Max* is the mathematical operator of the maximum,
*Popt* is an optimal power of the laser beam (111) of the cutting system (10), determined depending on
the workpiece (1) to be cut, and/or
the cutting parameters, and/or
the type of system (10),
to minimize the linear mass defect (Mp) of the workpiece during a cutting of the workpiece (1)
where the linear mass defect (Mp) is defined as the mass defect of the workpiece, after cutting, per unit of cut length, expressed in g/m; and
where Mp is obtained by weighing difference before (Mi) and after (Mf) the cutting of length L, such that Mp=(Mf-Mi)/L;
$\lambda$ is a leading coefficient representing the number of kW required for cutting the workpiece per mm of workpiece (1) thickness, and
*e* is the thickness of the workpiece, in mm.

**2.** The method according to claim 1, wherein the cutting power Pd has the form:

$$pd = Max(\Lambda; \lambda e)$$

where

$\Lambda$ is a predetermined constant,
$\lambda$ is a leading coefficient representing the number of kW required for cutting the workpiece per mm of workpiece thickness, and

*e* is the thickness of the workpiece, in mm.

3. The method according to claim 2, wherein, for a cutting system (10) including a laser source (11) of the type yttrium-aluminium garnet YAG for the production of a laser beam (111) having a wavelength in the order of 1 $\mu$m, the power Pd has the form:

$$pd = Max(4.75; 0.1 \cdot e)$$

4. The method according to any of claims 1 to 3, including an initial step of determining an expression of the power of the laser beam depending on the workpiece (1) to be cut, and/or on the cutting parameters, and/or on the type of system (10), the initial step according to which:

- the system (10) performs (S1) a plurality of test cuttings of a workpiece (1) by varying the power of the beam (111), and/or the workpiece (1) to be cut, and/or cutting parameters and/or the type of system (10);
- a sensor (14) performs a plurality of corresponding measurements (S2) of the mass defect (Mp) at each test cutting of the workpiece (1),
- a calculator (15)
expresses (S3) the linear mass defect (Mp) during each test cutting of the workpiece (1) as depending on the power of the beam (111), and/or on the workpiece (1) to be cut, and/or on the cutting parameters and/or on the type of system (10);
performs a partial derivative (S4) of the expression of the linear mass defect (Mp), relative to the power of the laser beam, and determines (S4) the expression allowing said partial derivative to become zero depending on the workpiece (1) to be cut, and/or on the cutting parameters and/or on the type of system (10).

FIG. 1

EP 2 635 397 B1

## FIG. 2

```
┌─────────────────┐
│       S1        │
└─────────────────┘
         │
         ▼
┌─────────────────┐
│       S2        │
└─────────────────┘
         │
         ▼
┌─────────────────┐
│       S3        │
└─────────────────┘
         │
         ▼
┌─────────────────┐
│       S4        │
└─────────────────┘
         │
         ▼
┌─────────────────┐
│       S5        │
└─────────────────┘
```

FIG. 3B

Limite du domaine de validité de la découpe

MP (g/m)
900
600
300
0

e f g h

P (kW)
1 2 3 4 5 6 7 8

DB = 6mm

d
c
b
a

e __ #a = 10.00    e __ #e = 50.00
e __ #b = 20.00    e __ #f = 60.00
e __ #c = 30.00    e __ #g = 70.00
e __ #d = 40.00    e __ #h = 80.00

FIG. 3A

Limite du domaine de validité de la découpe

h
g
f
e
d
c
b
a

MP (g/m)
1600
1200
800
400
0

P (kW)
1 2 3 4 5 6 7 8

DB = 3mm

e __ #a = 10.00    e __ #e = 50.00
e __ #b = 20.00    e __ #f = 60.00
e __ #c = 30.00    e __ #g = 70.00
e __ #d = 40.00    e __ #h = 80.00

17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. DRYGALLA et al.** Modularised laser beam cutting technology for dismantling applications. *Welding in the World,* Septembre 2007, vol. 51 (9/10